# EUROPEAN PATENT APPLICATION

(11) **EP 4 660 110 A1**
(43) Date of publication of application: **10.12.2025**
(21) Application number: 25180575.0
(22) Date of filing: 03.06.2025
(51) Int. Cl.: B65G 59/00, B65G 59/02, B65B 41/00

(54) **METHOD FOR UNLOADING FROM A SUPPORT ELEMENT A STACK OF BLANKS**

(30) Priority: 06.06.2024 IT 202400013066
(71) Applicant: R.A JONES & CO., Covington, KY 41017 (US)
(72) Inventor: GIGANTE, Antonio, 40133 BOLOGNA (IT)
(74) Representative: Tirloni, Bartolomeo

(57) **Abstract**

Method for unloading from a supporting element (2) a stack of blanks (3) resting on an interlayer (4) comprising one or more protrusions that delimit one or more channels. The method comprises: positioning a robotic arm (50) on which a handling member (52) is mounted, comprising one or more prongs and a gripping element movable between a gripping position and a disengagement position; inserting each prong between the stack of blanks (3) and the interlayer (4), so that each prong engages a respective channel; moving the gripping element until reaching the gripping position to clamp the stack of blanks (3) between the gripping element and each prong; lifting the stack of blanks (3) to unload the stack of blanks (3); and moving the stack of blanks (3) in space.

## Description

### Technical field of the invention

The present invention concerns a method for unloading from a support element, e.g. a pallet, a stack of blanks.

### State of the art

In the packaging field, for example of food products (e.g. corn flakes, muesli, etc.), it is known to feed a packaging machine with blanks that the packaging machine uses in the packaging process, for example by making from one or more blanks a container through suitable operations, e.g. folding and gluing.

Typically the blanks are fed to the packaging machine grouped in stacks of blanks, from which the packaging machine picks up one blank at a time for subsequent use.

Before being fed to the packaging machine, for easy transport, the stacks of blanks are typically temporarily stored resting on a support element (e.g. a bench or "pallet"), distributed in a plurality of horizontal layers vertically stacked on the support element, wherein each layer comprises a plurality of stacks of blanks placed side by side with one another.

Typically between each pair of adjacent layers of stacks of blanks, as well as typically between the support element and the bottom layer of stacks of blanks, a respective flat interlayer is arranged which facilitates and reinforces the stacking of the layers.

### Summary of the invention

The term "blank" (or "cutout") is intended to mean a sheet of paper or cardboard, for example shaped and pre-processed by means of pre-folding lines, weakening lines and/or cuts, possible embossed markings or embossments, suitable for making a container through suitable subsequent folding and gluing operations.

The term "stack of blanks" is intended to mean a group of blanks, typically all identical to one another, and stacked in an aligned manner (along the vertical direction when the stack is resting on the interlayer).

The Applicant has observed that the manual unloading of the stacks of blanks from the support elements for feeding to the packaging machines requires a physical effort for the operator which, especially if repeated, can cause discomfort, wear and/or physical injuries.

The Applicant has therefore addressed the problem of unloading a stack of blanks from a support element in an automatic and at the same time reliable manner (e.g. in terms of repeatability of the unloading of the entire stack of blanks) and of freely moving the stack of blanks in space while maintaining the alignment of the blanks within the stack.

According to the Applicant the above problem is solved in whole or in part by a method in accordance with the appended claims and/or according to the following aspects and embodiments.

According to one aspect the invention concerns a method for unloading from a support element a stack of blanks resting on an interlayer.

Preferably said interlayer comprises one or more protrusions that superiorly define a supporting surface on which said stack of blanks rests.

Preferably said one or more protrusions delimit one or more channels arranged at a lower level than said supporting surface.

Preferably said method comprises positioning a robotic arm on which a handling member is mounted.

Preferably said handling member comprises one or more prongs.

Preferably said handling member comprises a gripping element movable between a gripping position and a disengagement position.

Preferably said method comprises, with said gripping element in the disengagement position, inserting said one or more prongs between said stack of blanks and said interlayer, so that each of said one or more prongs engages a respective channel of said one or more channels.

Preferably said method comprises moving said gripping element towards said one or more prongs until reaching said gripping position to clamp said stack of blanks between said gripping element and said one or more prongs.

Preferably said method comprises, with said stack of blanks clamped between said gripping element and said one or more prongs, lifting said stack of blanks via said handling member to unload said stack of blanks from said support element.

Preferably said method comprises, via said robotic arm, moving said stack of blanks clamped between said gripping element and said one or more prongs in space.

According to one aspect the invention concerns a method for feeding a stack of blanks to a packaging machine, comprising the method for unloading from a support element said stack of blanks according to the above aspect, in any embodiment, and, after said releasing the stack of blanks, feeding said stack of blanks to said packaging machine.

According to the Applicant the one or more prongs shaped to engage (and slide along) respectively the one or more channels ensure the gripping of the entire stack, including the blanks arranged at the base of the stack, since the one or more prongs are positioned at a lower level than the supporting surface of the stack and below the base of the stack. Moreover, the fact that the stack of blanks remains clamped between the one or more prongs and the gripping element allows to move the stack freely in space (orienting and/or displacing it as desired) by means of the robotic arm, while keeping the stack intact and with the blanks aligned with one another.

The present invention in one or more of the aforesaid aspects can have one or more of the following preferred features.

Preferably said method is carried out in an unloading station.

Preferably the method comprises via said robotic arm at least partially placing said stack of blanks on an unloading surface (e.g. a conveyor belt). Preferably the method comprises, subsequent to said at least partially placing said stack of blanks, moving said gripping element away from said one or more prongs until reaching the disengagement position for releasing said stack of blanks on said unloading surface. In this way the stack of blanks is released on the unloading surface.

Preferably the method comprises unloading from said supporting element a plurality of stacks of blanks, by iterating each action described herein for each stack of blanks of said plurality of stacks of blanks.

Preferably said stacks of blanks are distributed in a plurality of overlapping layers of stacks of blanks, two adjacent layers of said plurality of overlapping layers being separated from each other by a respective interlayer according to the present invention. Preferably the method comprises, successively for each layer, unloading said layer of stacks of blanks until (at least partially) releasing said respective underlying interlayer from said layer. Preferably the method comprises removing said respective interlayer from said supporting element. In this way it is possible to access the underlying layer for unloading it from the supporting element.

Preferably said stacks of blanks are distributed (e.g. in each layer) in one or more rows of stacks of blanks, each row comprising a plurality of stacks of blanks positioned side by side along a first direction. Preferably the rows of blanks are positioned side by side along a second direction orthogonal to the first direction.

Preferably said unloading said layer of stacks of blanks comprises, with said gripping element in disengagement position, inserting said one or more prongs between said interlayer and two stacks of blanks positioned side by side along said first direction of said layer of stacks of blanks, so that each of said one or more prongs engages a respective channel of said one or more channels. In this way it is possible to increase the efficiency of the unloading process.

Preferably said unloading said layer of stacks of blanks comprises moving said gripping element in approaching movement toward said one or more prongs until reaching said gripping position for clamping between said gripping element and said one or more prongs said two stacks of blanks positioned side by side along said first direction of said layer of stacks of blanks.

Preferably said unloading said layer of stacks of blanks comprises, with said two stacks of blanks positioned side by side along said first direction of said layer of stacks of blanks clamped between said gripping element and said one or more prongs, lifting said two stacks of blanks positioned side by side by means of said handling member for unloading from said supporting element said two stacks of blanks positioned side by side. Preferably said unloading said layer of stacks of blanks comprises moving in space by means of said robotic arm said two stacks of blanks positioned side by side along said first direction of said layer of stacks of blanks clamped between said gripping element and said one or more prongs.

Preferably said unloading said layer of stacks of blanks comprises by means of said robotic arm placing at least partially on an unloading surface a first stack of blanks of said two stacks of blanks positioned side by side along said first direction of said layer of stacks of blanks. Preferably said unloading said layer of stacks of blanks comprises, subsequently to said placing at least partially said first stack of blanks, moving said gripping element away from said one or more prongs until reaching the disengagement position to release said first stack of blanks. In this way said first stack of blanks is released on said unloading surface.

Equally preferably, said unloading said layer of stacks of blanks comprises via said robotic arm, placing on an unloading surface said two stacks of blanks positioned side by side along said first direction of said layer of stacks of blanks. Preferably said unloading said layer of stacks of blanks comprises, subsequently to said placing said two stacks of blanks positioned side by side along said first direction of said layer of stacks of blanks, moving said gripping element away from said one or more prongs until reaching the disengagement position to release said two stacks of blanks positioned side by side along said first direction of said layer of stacks of blanks. In this way both said stacks of blanks are released on said unloading surface, in a fast and efficient manner.

Preferably the supporting element is a pallet, e.g. made of wood, cardboard, metal alloy or plastic.

Preferably said interlayer is a single-piece body. Preferably, said interlayer is rigid. Preferably, said interlayer is made of polymeric material. In this way the interlayer is efficiently suited for use in the present method, for example it does not deform during use. Preferably said interlayer is plate-shaped, more preferably with constant thickness. Preferably said interlayer has a corresponding recess opposite each protrusion, said recess being counter-shaped to said protrusion. In this way the interlayers can be stacked with minimal bulk.

Preferably the method comprises stacking said respective removed interlayer in a stack of empty interlayers.

Preferably each protrusion has a shape in trapezoidal orthogonal section. In this way the alignment tolerances of the respective prong are relaxed.

In one embodiment said interlayer comprises (at the position of said stack or of each row of stacks) a plurality of protrusions (e.g. two, and only two, protrusions delimiting a single channel interposed between the two protrusions, wherein said handling member comprises one and only one prong, more preferably having a flat plate-shaped configuration). In one embodiment said plurality of protrusions delimits a plurality of channels.

In one embodiment said plurality of protrusions comprises (at the position of said stack or of each row of stacks) at least four protrusions (delimiting at least three channels), for example five protrusions (delimiting at least four channels), wherein said handling member comprises at least three (for example four) prongs.

In an alternative embodiment said interlayer comprises (at the position of said stack or of each row of stacks) a single protrusion delimiting, on opposite sides, two channels. Preferably in this embodiment said handling member comprises two and only two prongs (so that each of said two prongs engages a respective channel of said two channels). Preferably said one or more channels and/or said one or more protrusions have a main extension along a first direction (e.g. have a profile, on a section orthogonal to the first direction, that is invariant when moving along the first direction). Preferably said first direction is parallel to said supporting surface. Preferably said channels are mutually parallel. Preferably said protrusions are mutually parallel and more preferably parallel to said one or more channels.

Preferably said handling member comprises (in correspondence with said stack of semifinished articles or with each row of stacks) a respective prong for each channel. In this way the prongs interleave with the protrusions by engaging all the channels located below the stack of semifinished articles, for a secure gripping of the stack of semifinished articles.

Preferably said handling member comprises an actuation system to alternately move said gripping element between said gripping position and said disengagement position.

Preferably said gripping element comprises a flat and plate-shaped gripping portion. Preferably said gripping element comprises a support arm, wherein said gripping portion is rigidly fixed to a first end of said support arm. In this way the handling member is simple and lightweight.

Preferably said moving said gripping element comprises rotating said gripping element around a rotation axis, more preferably orthogonal to said first direction. Preferably said rotation axis passes through a second end of said support arm, opposite to said first end. In this way the handling member is lightweight and compact.

Preferably said moving said gripping element comprises rigidly translating said gripping element along said first direction. In this way the gripping element can be moved away from said one or more prongs until the projection of the gripping element no longer interferes in any way with said one or more prongs. In this manner said stack of blanks can be freely accessed, without obstruction from the gripping element.

Preferably said robotic arm is an anthropomorphic robotic arm, more preferably comprising at least three axes, more preferably rotational axes.

### Brief description of the figures

Figure 1 schematically and partially shows an unloading station capable of implementing the method according to the present invention;
figure 2 schematically and partially shows a detail of figure 1;
figure 3 schematically shows an example of an interlayer;
figures 4-6 schematically and partially show respective side views of further embodiments of a station capable of implementing the method of the present invention;
figures 7-9 schematically and partially show in perspective view some steps of the method according to the present invention.

### Detailed description of some embodiments of the invention

The features and advantages of the present invention will be further clarified by the following detailed description of some embodiments, provided by way of example and not limitation of the present invention, with reference to the accompanying figures.

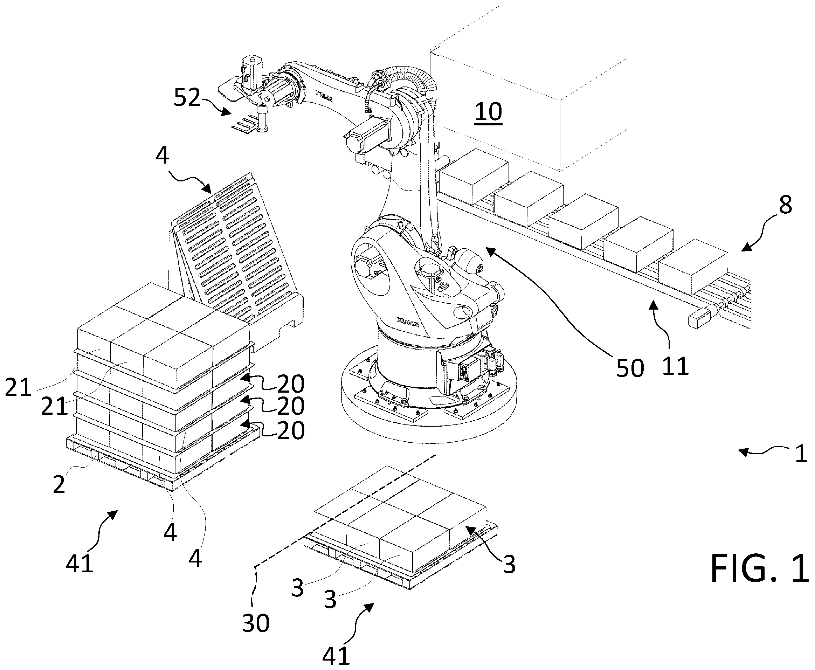

Figure 1 exemplarily shows an unloading station 1 for unloading from a supporting element 2 (e.g. a wooden europallet) a plurality of stacks of blanks 3 placed on an interlayer 4.

Preferably the stacks of blanks 3 are distributed in a plurality of horizontal and superimposed layers 20, each layer 20 comprising a respective plurality (in the example of figure 1 in total number of six) of stacks of blanks 3 positioned side by side, wherein each pair of adjacent layers 20 is separated by a respective interlayer 4.

Preferably an interlayer 4 can be positioned beneath a bottom layer 20, interposed between the latter and the supporting element 2. Preferably, each layer 20 comprises one or more rows 21 (in the example of figure 1, in number of three) of stacks of blanks 3, each row 21 comprising a plurality (in the example of figure 1, in number of two) of stacks of blanks 3 aligned along a first direction 30.

Preferably the interlayer 4 comprises one or more protrusions 5 that define a supporting surface 6 on which each layer 20 of stacks of blanks 3 rests and that delimit one or more channels 7 positioned at a lower level than the supporting surface 6.

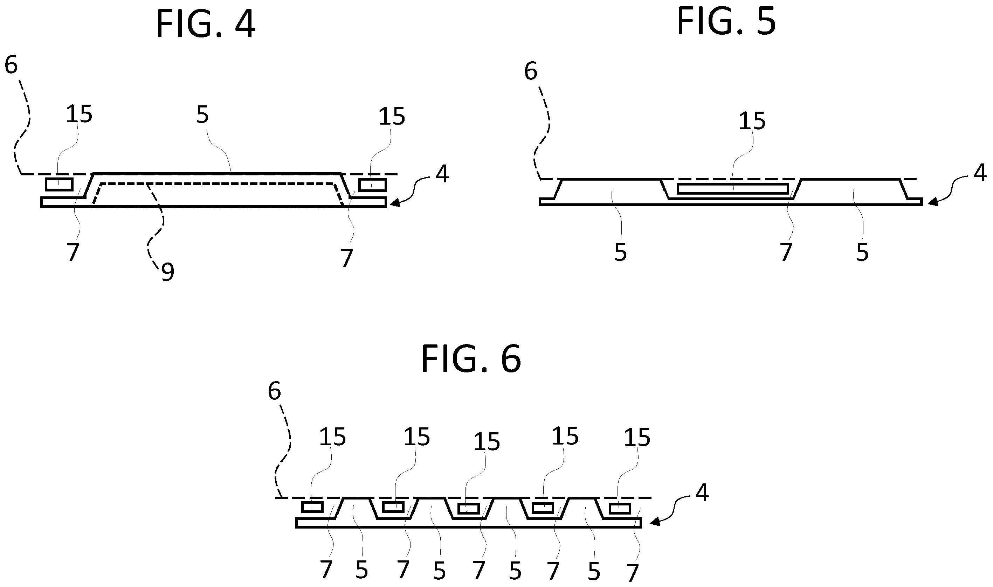

It is noted that the supporting surface 6 can be a discontinuous surface, lying substantially on a plane, shown in dashed line in figures 4-6.

Preferably the one or more channels 7 and the one or more protrusions 5 have a main extension along the first direction 30, are parallel to each other and have a profile, on a cross-section orthogonal to the first direction 30 (such profile being shown in figures 4-6), which is invariant when moving along the first direction 30.

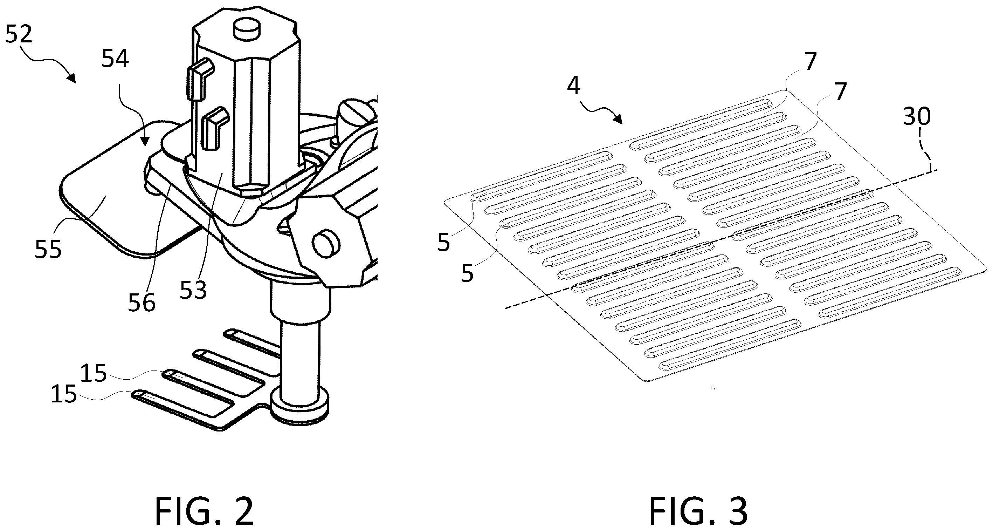

In one embodiment, as exemplarily shown in figures 1, 3, and 6-9, the interlayer 4 comprises, in correspondence with each stack of blanks 3 or with each row 21 of stacks of blanks 3, a plurality of protrusions 5 (e.g. two protrusions 5, as shown in figure 5, or four protrusions 5, as shown in figure 6, or five protrusions 5, as shown in figures 1, 3 and 7-9). In one embodiment, as exemplarily shown in figures 1, 3 and 6-9, the plurality of protrusions 5 defines a plurality of channels 7 (exemplarily shown in a number of four channels in figures 1, 3 and 7-9 and in a number of five channels in figure 6). In one embodiment, as exemplarily shown in figure 5, the two protrusions 5 define a single channel 7 interposed between the two protrusions 5.

In an alternative embodiment, as exemplarily shown in figure 4, the interlayer 4 comprises, at the position of each stack of blanks 3 or of each row 21 of stacks of blanks 3, a single protrusion 5 which defines, on opposite sides, two channels 7.

Preferably the interlayer 4 is a single rigid body substantially plate-shaped, as shown in the figures, and of constant thickness. In this way the interlayer 4 has a corresponding recess 9 (exemplarily shown in dashed lines in figure 4 only) on the opposite side of each protrusion 5 and counter-shaped to the protrusion 5, so as to allow the interlayers, once unloaded, to be stacked in a pile of interlayers (not shown).

Exemplarily the interlayer 4 is made of high-density polyethylene (HDPE). Advantageously such material is thermoformable by hot vacuum molding (e.g. 150-200°C).

Preferably each protrusion 5 has a substantially trapezoidal shape in cross-section, as shown in Figures 4-6.

Preferably the station 1 comprises a robotic arm 50 on which a handling member 52 is mounted. Exemplarily the robotic arm 50 is an anthropomorphic robotic arm comprising four rotational axes (one vertical and three horizontal and parallel to each other). Preferably the handling member 52 comprises one or more prongs 15 shaped for engaging the one or more channels 7 and for sliding along the one or more channels 7 when the handling member 52 moves along the first direction 30. In one embodiment, in the case where the two protrusions 5 define a single channel 7 (as shown in figure 5), the single prong 15 can have a flat and plate-like shape. In a further embodiment, in the case where a single protrusion 5 defines, on opposite sides, two channels 7 (as shown in figure 4), the handling member 52 comprises two prongs 15, preferably also a movable holding element (not visible in the figures) which can be appropriately moved and positioned between the two prongs 15.

Preferably the handling member 52 comprises a gripping element 54 and an actuation system 53 for moving the gripping element 54 alternately between a gripping position and a disengagement position, the disengagement position being farther from said prongs 15 than the gripping position.

Preferably the gripping element 54 comprises a support arm 56 and a gripping portion 55, plate-shaped and flat, rigidly fixed to a first end of the support arm 56. The support arm 56, at a second end opposite to the first end, is rotatably fixed to the robotic arm 50. Exemplarily the handling device comprises a vision system (not shown in the figure) for real-time monitoring of the alignment of each prong 15 with the respective channel 7.

In the example shown the station 1 comprises two adjacent areas 41 in which two respective support elements 2 are positioned in order to allow the replacement of the support element 2 in one of the two areas during the unloading of the support element in the other area.

Preferably the stack of blanks 3 unloaded from the support element 2 is fed to a packaging machine 10 (not shown or described in detail as it is for example of a known type) which is served by the unloading station 1. Exemplarily the station 1 comprises a conveyor belt 11 for feeding the unloaded stack of blanks 3 to the machine 10.

The unloading station 1 is suitable for implementing the method according to the present invention.

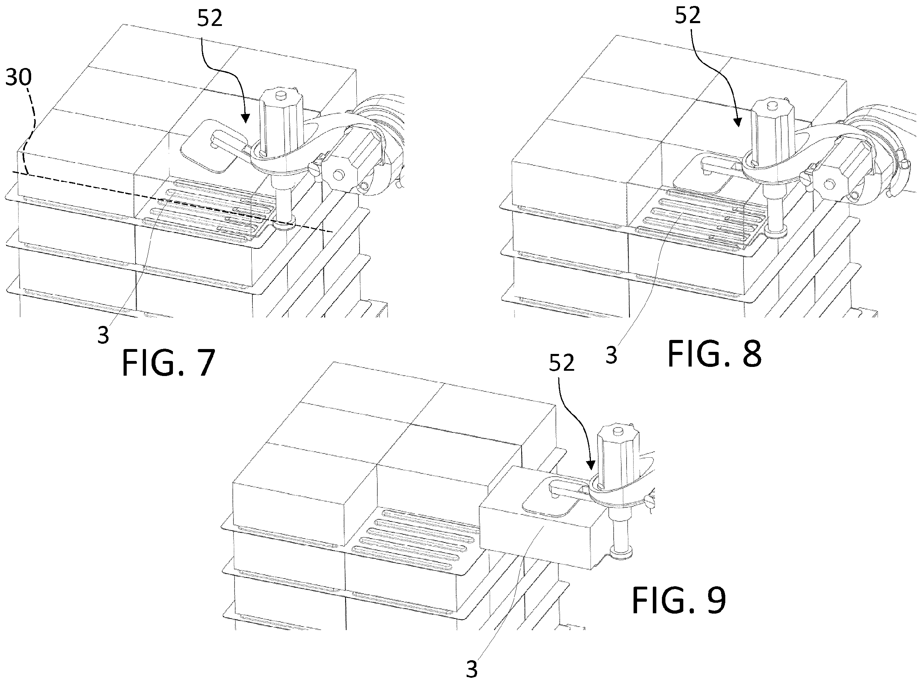

Preferably, the movement of the handling member 52 by means of the robotic arm 50 is provided, with the gripping element 54 in the disengagement position, to a position close to one layer 20 of blanks 3 to be unloaded, in such a way that the one or more prongs 15 are located at an elevation slightly lower than the supporting surface 6 on which the blanks 3 of the layer 20 rest, with the prongs 15 aligned along the first direction 30. Subsequently the robotic arm 50 pushes the handling member 52 along the first direction 30, inserting the prongs 15 between the pile of blanks 3 and the interlayer 4 so that each prong 15 engages a respective channel 7 (the prongs interleaving with the protrusions 5, as shown in figure 7).

Once the prongs 15 have been fully inserted into the channels 7, the actuation system 53 rotates the gripping element 54 to move it toward the prongs 15 until it reaches the gripping position, in which it contacts and, by exerting an appropriate pressure, clamps the stack of blanks 3 between the gripping element 54 and the prongs 15 (figure 8).

If the interlayer 4 has the alternative embodiment shown in figure 4, the robotic arm 50 pushes the handling member 52 along the first direction 30 so that each of the two prongs 15 engages one of the two channels 7 and is inserted between the stack of blanks 3 and the interlayer 4. After the two prongs 15 have been fully inserted into the respective channels 7 and before rotating the gripping element 54 to move it toward the prongs 15 until reaching the gripping position, the robotic arm 50, in this alternative embodiment, may optionally move the handling member 52 along a direction substantially parallel to the vertical direction, to bring the two prongs 15 away from the interlayer 4. Thanks to said disengagement of the two prongs 15, the stack of blanks 3 is lifted from the supporting surface 6 of the interlayer 4, generating a space or gap between the stack of blanks 3 and the supporting surface 6. Into said gap, the robotic arm 50 may then advantageously insert the mobile retaining element (not visible in the figures) to position it between the two prongs 15 and underneath the stack of blanks 3. The mobile retaining element cooperates with the two prongs 15 and with the gripping element 54 to clamp the stack of blanks 3.

Subsequently, with the stack of blanks 3 clamped between the gripping element 54 and the prongs 15 (and optionally the mobile retaining element), the robotic arm 50 lifts the handling member 52 and thus the stack of blanks 3 to unload the stack of blanks 3 from the supporting element 2 (figure 9). In this way the robotic arm 50 can freely move the stack of blanks 3 through space while clamped between the gripping element 54 and the prongs 15.

Exemplarily the robotic arm 50 moves the handling member 52 to bring the stack of blanks 3 to an unloading surface 8 coinciding with the upper face of the conveyor belt 11 and to place the stack of blanks 3 on the unloading surface 8. By moving the gripping element 54 away from the prongs 15 until reaching the disengagement position the stack of blanks 3 is released onto the unloading surface 8.

Advantageously the robotic arm 50 can reach any point on the unloading surface 8, so as to be able to handle possible variations in the feed rate of the stacks of blanks 3 to the packaging machine 10.

Once the stack of blanks 3 has been unloaded, the above operations are iterated to sequentially unload from the support element 2 the other stacks of blanks 3 of the layer 20. Once the entire layer 20 has been unloaded, the now-empty interlayer 4 is removed (e.g. by means of suitable suction cups - not shown - arranged on the handling member 52, or by means of a tool - not shown - interchangeable on the head of the robotic arm 50) from the support element 2 and the above operations are iterated to unload the underlying layer 20.

## Claims

1. Method for unloading from a support element (2) a stack of blanks (3) resting on an interlayer (4), wherein said interlayer (4) comprises one or more protrusions (5) that superiorly define a supporting surface (6) on which said stack of blanks (3) rests and that delimit one or more channels (7) arranged at a lower level than said supporting surface (6), said method comprising:
- positioning a robotic arm (50) on which a handling member (52) is mounted, wherein said handling member (52) comprises one or more prongs (15) and a gripping element (54) movable between a gripping position and a disengagement position;
- with said gripping element (54) in the disengagement position, inserting said one or more prongs (15) between said stack of blanks (3) and said interlayer (4), so that each of said one or more prongs (15) engages a respective channel (7) of said one or more channels (7);
- moving said gripping element (54) towards said one or more prongs (15) until reaching said gripping position to clamp said stack of blanks (3) between said gripping element (54) and said one or more prongs (15);
- with said stack of blanks (3) clamped between said gripping element (54) and said one or more prongs (15), lifting said stack of blanks (3) via said handling member (52) to unload said stack of blanks (3) from said support element (2); and
- via said robotic arm (50), moving said stack of blanks (3) clamped between said gripping element (54) and said one or more prongs (15) in space.

2. Method according to claim 1, comprising via said robotic arm (50) at least partially placing said stack of blanks (3) on an unloading surface (8) and subsequently moving said gripping element (54) away from said one or more prongs (15) until reaching the disengagement position to release said stack of blanks (3) on said unloading surface (8).

3. Method according to claim 1 or 2, comprising unloading from said supporting element (2) a plurality of stacks of blanks (3) by iterating for each stack of blanks (3) of said plurality of stacks of blanks (3) said inserting said one or more prongs (15), moving said gripping element (54) towards, lifting said stack of blanks (3), and moving said stack of blanks (3) in space.

4. The method according to claim 3, wherein said stacks of blanks (3) are distributed in a plurality of overlapping layers (20) of stacks of blanks (3), two adjacent layers (20) of said plurality of overlapping layers (20) being separated from each other by a respective interlayer (4), and wherein the method comprises, successively for each layer (20), unloading said layer (20) of stacks of blanks (3) until releasing said respective underlying interlayer (4) from said layer (20), and removing said respective interlayer (4) from said support element (2).

5. Method according to any one of the preceding claims, wherein said interlayer (4) is a single rigid body, and wherein said interlayer (4) has a corresponding recess (9) opposite each protrusion (5), said recess (9) being counter-shaped to said protrusion (5).

6. Method according to any one of the preceding claims, wherein said interlayer (4) comprises in correspondence of said stack of blanks (3), a plurality of protrusions (5) of said one or more protrusions (5), wherein said plurality of protrusions (5) delimits a plurality of channels (7).

7. Method according to any one of the preceding claims, wherein said interlayer (4) comprises, at said stack of blanks (3), two protrusions (5) which delimit a single channel (7) interposed between the two protrusions (5), wherein said handling member (52) comprises one and only one prong (15) having a flat plate-shaped configuration.

8. Method according to any one of claims 1 to 5, wherein said interlayer (4) comprises at said stack of blanks (3), only one protrusion (5) which delimits, on opposite sides, two channels (7) of said one or more channels (7), and wherein said handling member (52) comprises two and only two prongs (15).

9. Method according to any one of the preceding claims, wherein said gripping element (54) comprises a plate-shaped and flat gripping portion (55).

10. Method according to any one of the preceding claims, wherein said handling member (52) comprises an actuation system (53) to alternately move said gripping element (54) between said gripping position and said disengagement position.

11. Method according to any one of the preceding claims, wherein said moving said gripping element (54) comprises rotating said gripping element (54) about a rotation axis.

12. Method according to any one of the preceding claims, wherein, at said stack of blanks (3), said handling member (52) comprises one and only one respective prong (15) for each channel (7).

13. Method for feeding a stack of blanks (3) to a packaging machine (10), comprising the method for unloading said stack of blanks (3) from a support element (2) according to any one of the preceding claims and, after said releasing said stack of blanks (3), feeding said stack of blanks (3) to said packaging machine (10).
